# FASCICULE DE BREVET EUROPEEN

(11) **EP 3 712 475 B1**
(45) Date de publication et mention de la délivrance du brevet: **07.09.2022**
(21) Numéro de dépôt: 20163070.4
(22) Date de dépôt: 13.03.2020
(51) Int. Cl.: F16K 31/50, F16K 3/312, F16K 3/02, F16K 35/02

(54) **DISPOSITIF DE MISE EN MOUVEMENT D'UN OBTURATEUR D'UNE VANNE GUILLOTINE**
VORRICHTUNG ZUM BEWEGEN EINES ABSPERRORGANS EINES GUILLOTINENVENTILS
DEVICE FOR MOVING A SHUTTER OF A GUILLOTINE VALVE

(30) Priorité: 18.03.2019 FR 1902763
(43) Date de publication de la demande: 23.09.2020
(73) Titulaire: Materiel Sante Environnement, 62410 Wingles (FR)
(72) Inventeur: ROMELARD, Reynald, 62410 WINGLES (FR)
(74) Mandataire: Casalonga

(56) Documents cités:
- DE-A1- 19 919 866
- US-B1- 7 975 984

## Description

La présente invention concerne le domaine des vannes, en particulier mais non exclusivement les vannes guillotines de type vanne de barrage, utilisées dans les réseaux d'eaux pluviales ou d'eaux usées.

Une vanne (de l'anglais « valve ») est un dispositif destiné à contrôler le débit d'un fluide comprenant généralement un corps, une voie de passage du fluide, un obturateur par exemple de type boisseau ou papillon, et un volant qui sert à manœuvrer ladite vanne.

Les vannes à guillotine sont un type spécifique de vanne couramment utilisées dans les applications industrielles pour contrôler l'écoulement de fluides contenant notamment des particules solides ou semi-solides, telles que des poudres, granulés, fibres ou par exemple des hydrocarbures.

Selon une particularité de la vanne guillotine, la descente et la remontée de l'obturateur se font par une tige équipée d'une poignée et coopérant avec un écrou.

Il suffit dans ce cas de remonter la tige pour que l'obturateur soit ouvert et que le fluide circule dans la vanne, ou de descendre la tige pour que l'obturateur descende dans le corps à l'image d'une lame de guillotine.

A cet effet, la vanne guillotine est conçue comme un corps étroit dans lequel descend l'obturateur, et auquel est fixé de part et d'autres des glissières permettant la translation de l'obturateur.

La vanne guillotine a donc l'avantage d'avoir un système d'obturation simple sans roulement ni axe de rotation.

En cas d'urgence, notamment lors de pollution, l'obturateur doit être fermé le plus rapidement possible.

Les vannes guillotines utilisées dans les réseaux d'eaux pluviales ou d'eaux usées peuvent avoir un diamètre de passage par exemple entre 160 mm à 1200 mm et un obturateur dont la masse peut atteindre, à titre d'exemple, 110 kg pour un diamètre de passage de 1200 mm.

Or, la tige de la vanne guillotine apte à descendre et à remonter l'obturateur est généralement une tige trapézoïdale ayant un pas de vis autour de 5 mm.

Par « pas de vis » on entend la distance relative parcourue par une vis ou tige lors d'un tour complet.

Ainsi, la fermeture de la vanne ayant un diamètre de passage de 1200 mm et comprenant deux tiges trapézoïdales d'une longueur de 1450 mm nécessite jusqu'à 290 tours de vis et peut prendre plus de 15 minutes, ce qui est bien entendu incompatible avec les critères d'urgence qui doivent être respectés en cas de pollution. Le document DE 199 19 866 Al divulgue une vanne guillotine de l'art antérieur comprenant les caractéristiques selon le préambule de la revendication 1.

Le but de l'invention est donc de palier à cet inconvénient et de proposer un dispositif de mise en mouvement de l'obturateur de la vanne capable de le descendre plus rapidement, en cas d'une pollution accidentelle par exemple.

Au vu de ce qui précède, l'invention a pour objet, selon un premier aspect, un dispositif de mise en mouvement d'un obturateur de vanne comprenant une tige filetée montée à rotation dans la direction de déplacement de l'obturateur et un écrou associé à l'obturateur apte à coopérer avec la tige filetée, dans lequel la tige filetée comprend plusieurs filets et un pas de vis compris entre 40 et 200 mm.

Le procédé comprend aussi des moyens de blocage en rotation de la tige dans le sens de la fermeture et de l'ouverture de l'obturateur.

La tige est en inox, ce qui lui confère un caractère inoxydable et lui permet de résister à la corrosion lorsqu'elle est en contact avec un milieu acide. Elle peut être avantageusement en inox 304L ou 316L, ce qui apporte une protection supplémentaire contre la rouille.

Bien entendu, la tige peut être en tout autre matériau ayant une bonne résistance à la corrosion dans les milieux acides.

Grâce à ses filets, la tige peut avoir un pas de vis plus important, et coopérant ainsi avec l'écrou, faire descendre ou remonter plus rapidement l'obturateur en cas de besoin.

Cependant, afin d'éviter un entraînement de l'obturateur par son propre poids ou par un effet de vibration, les moyens de blocage sont configurés pour maintenir l'obturateur en position par exemple tous les 6.6 mm de course de l'obturateur.

Avantageusement la tige filetée comprend 8 filets et constitue avec l'écrou un ensemble amovible.

Par « amovible » on entend la possibilité de retirer complètement l'écrou et la tige filetée de la vanne et cela sans dessoudage ou démontage de la vanne.

Selon l'invention, la vanne comprend une traverse haute solidaire des moyens de blocage comportant des billes en acier disposées sur une cage à friction sur ladite traverse haute.

En d'autres termes, pour maintenir l'obturateur en position, les moyens de blocage comprennent des billes et une cage de friction permettant de réaliser un blocage par roulement à billes.

Un apport en lubrification est avantageux pour préserver les moyens de blocage contre l'oxydation.

En variante ne faisant pas partie de l'invention, la vanne comprend une traverse haute solidaire des moyens de blocage qui comportent des poussoirs à ressort en inox disposés sur ladite traverse haute.

Les poussoirs à ressort étant en inox, ils ne s'oxydent pas.

De préférence, l'écrou comporte une collerette fixée sur un registre associé à l'obturateur.

Par « registre » on entend une partie solidaire de l'obturateur s'étendant horizontalement.

L'écrou est boulonné sur le registre, ce qui rend simple son démontage. Il se décline en deux versions, chacune étant adaptée à un sens spécifique de fermeture de l'obturateur.

On peut ainsi le changer avec la tige en cas d'usure ou en cas de changement de sens de fermeture.

Avantageusement, l'écrou est en bronze ou en polymère.

Un écrou en polymère présente une bonne résistance aux agents chimiques. Il est adapté à être utilisé dans un milieu acide.

De préférence, les moyens de blocage sont configurés pour maintenir ledit registre en position dès que la tige filetée a parcouru un angle de rotation sensiblement égal à un angle x, x dépendant de la structure des moyens de blocage.

L'angle x est de préférence égal à 60°.

Préférentiellement, la vanne comprend un joint d'étanchéité en caoutchouc EPDM de forme sensiblement cylindrique, carrée ou rectangulaire entourant une voie de la vanne apte à permettre l'écoulement d'un fluide à travers elle.

Le caoutchouc EPDM (pour éthylène-propylène-diène monomère) est avantageux pour assurer l'étanchéité lorsqu'il est en contact avec un milieu corrosif.

Avantageusement, la vanne comprend des glissières en polyéthylène haute densité de part et d'autre de la vanne, aptes à faire glisser l'obturateur.

Ce matériau a une très bonne résistance aux acides et aux hydrocarbures.

L'invention a également pour objet une vanne guillotine comprenant un dispositif de mise en mouvement de l'obturateur de ladite vanne tel que décrit ci-avant.

D'autres avantages et caractéristiques de l'invention apparaîtront à l'examen de la description détaillée des modes de mise en œuvre et de réalisation de l'invention, nullement limitatifs, et des dessins annexés sur lesquels :
[Fig 1] représente une vue en perspective d'une vanne guillotine selon un mode de réalisation de l'invention.
[Fig 2] représente une vue détaillée des moyens de blocage de ladite vanne guillotine selon un mode de réalisation ne faisant pas partie de l'invention.

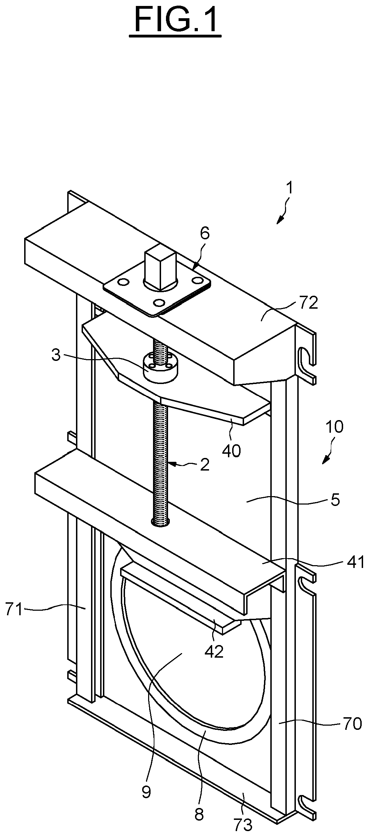

La vanne guillotine illustrée sur la figure 1, désignée par la référence numérique générale 1, est une vanne guillotine adaptée aux applications industrielles et a pour fonction de contrôler l'écoulement de fluides dans une canalisation placée dans un regard.

Comme on le voit, la vanne guillotine 1 est généralement murale et comprend un corps 10 délimitant une voie 9 de circulation de fluide, et un obturateur 5 déplaçable par rapport à la voie 9 entre une portion ouverte et une portion fermée de la vanne sous l'action d'un dispositif de mise en mouvement dudit obturateur 5 comprenant une tige filetée 2 et un écrou 3.

Pour garantir l'étanchéité du corps 10, un joint d'étanchéité 8 en caoutchouc EPDM sensiblement cylindrique entoure la voie 9.

Le joint d'étanchéité 8 peut être aussi de forme carrée ou rectangulaire.

Le caoutchouc EPDM (pour éthylène-propylène-diène monomère) est avantageux pour assurer l'étanchéité lorsque la vanne 1 est en contact avec un milieu corrosif.

Le corps 10 de la vanne est en inox, ce qui lui confère un caractère inoxydable et lui permet de résister à la corrosion lorsqu'il est en contact avec un milieu acide. Il peut avantageusement être en inox 304L ou 316L ou en tout autre matériau qui apporte une bonne protection contre la rouille.

Le corps 10 comprend une traverse haute 72 disposée horizontalement et solidaire avec ledit corps 10 et une traverse basse 73 également disposée horizontalement et solidaire avec le corps 10.

La traverse haute 72 et la traverse basse 73 sont reliées de part et d'autre par deux glissières 70 et 71 solidaires du corps 10 dans lesquelles coulisse l'obturateur 5.

Par exemple, les glissières 70 et 71 sont en polyéthylène haute densité, un matériau qui présente une bonne résistance aux acides et aux hydrocarbures.

L'obturateur 5 est monté entre une position fermée et une position ouverte.

La tige filetée 2 est montée à rotation sur la traverse haute 72 et tourillonne dans un palier porté par une plateforme 41 solidaire du corps 10 et disposée horizontalement entre les glissières 70, 71.

La plateforme 41 comporte en son centre un passage d'un diamètre sensiblement supérieur à celui de la tige filetée 2 pour permettre son passage par exemple entre 2 et 5 mm par rapport au diamètre de la tige filetée 2.

La tige filetée 2 s'étend dans la direction de déplacement de l'obturateur 5.

L'écrou 3 est associé à l'obturateur 5 et est apte à coopérer avec la tige filetée 2.

La tige filetée comprend une pluralité de filets par exemple ici 8 filets, ayant chacun un pas de vis compris entre 40 et 200 mm.

Un pas de vis entre 40 et 200 mm permet de descendre rapidement l'obturateur 5 par exemple en cas d'une pollution accidentelle.

La tige filetée 2 peut avantageusement être en inox 304 ou 316 ou tout autre matériau conférant une bonne protection contre la rouille.

La tige filetée 2 peut avoir un filetage orienté à droite ou un filetage orienté à gauche. En d'autres termes, la tige filetée 2 est adaptée aux vannes guillotines 1 qui ont un sens de fermeture en sens horaire et en sens anti-horaire.

Le dispositif de mise en mouvement comprend en outre un registre 40, disposé horizontalement entre les deux barres verticales 70 et 71, sur lequel l'écrou 3 comportant préférentiellement une collerette est boulonné. L'écrou est donc amovible.

L'écrou 3 se décline en deux versions, chacune étant adaptée à un sens spécifique de fermeture de l'obturateur.

On peut ainsi le changer en cas d'usure ou en cas de changement de sens de fermeture.

L'écrou 3 est de préférence en bronze ou en polymère. Le polymère permet d'utiliser l'écrou 3 dans un milieu corrosif.

Il est à noter que le coefficient de frottement de la tige filetée 2 ayant ici 8 filets peut provoquer une descente brutale de l'obturateur 5 et du registre 40.

Cette descente brutale est due au poids de l'obturateur 5 et/ou à un effet de vibration.

Pour éviter cela, le dispositif de mise en mouvement comprend des moyens de blocage 6 disposés sur la traverse haute 72.

Les moyens de blocage 6 sont aptes à réaliser un blocage en rotation de la tige filetée 2 dans le sens de la fermeture et de l'ouverture de l'obturateur 5.

Ledit blocage est réalisé par les moyens de blocage 6 tous les 60° de rotation de la tige filetée 2 par exemple, c'est-à-dire, tous les 5 mm de course de la tige filetée 2.

La valeur de l'angle de rotation dépend de la structure des moyens de blocage 6 et le pas de course dépend de l'angle de rotation et du pas de vis de la tige filetée 2.

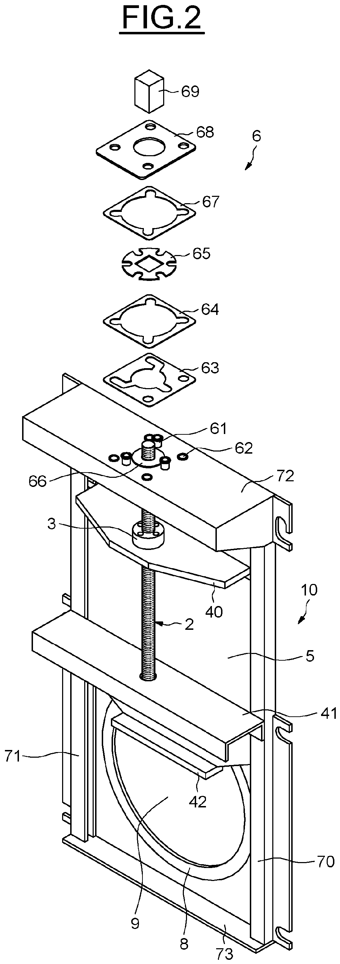

Sur la figure 2, on peut voir un exemple d'un ensemble de pièces constituant les moyens de blocage 6 selon un mode de réalisation ne faisant pas partie de l'invention.

Dans d'autres exemples ne faisant pas partie de l'invention, les moyens de blocage 6 peuvent comprendre toute pièce ou tout ensemble de pièces apte à réaliser ladite fonction de blocage.

Les moyens de blocage 6 comprennent un ensemble de pièces empilées sur la traverse haute 72 et , dans un exemple ne faisant pas partie de l'invention, comportent des poussoirs à ressort 61, une platine de guidage 63, une came 65 soudée et placée entre deux entretoises 64 et 67, un carter 68 et un registre 42.

Les poussoirs à ressort 61 utilisés pour maintenir l'obturateur 5 en position, ici au nombre de 3, sont avantageusement en inox pour éviter leur oxydation dans un milieu corrosif.

La platine de guidage 63 comprend en son centre un emplacement adapté à une rondelle d'usure Teflon 66 apte à entourer la tige filetée 2, des premiers passages pour accueillir les poussoirs à ressort 61 ici 3, et des deuxièmes passages prévus pour le vissage du carter 68.

Les deux entretoises 64 et 67 sont aptes à guider la came 65 préférentiellement soudée.

La structure de la came 65 permet de définir l'angle de rotation de la tige filetée 2 par exemple 60°.

Le carter 68 comprend en son centre un premier passage apte à accueillir une butée 69, soudée sur la came 65, apte à limiter le mouvement de la tige filetée 2 en lui faisant obstacle, et des deuxièmes passages permettant le vissage du carter 68 sur la traverse haute 72.

Les vis destinées à être vissées dans ces deuxièmes passages sont aptes à s'insérer dans des inserts 62 disposés sur la traverse haute 72.

Le carter 68 ainsi vissé emprisonne la came 65 ce qui empêche l'ensemble comprenant la butée 69, la came 65 et la tige filetée 2 de se détacher de la vanne 1.

Le vissage des moyens de blocage 6 permet de rendre la tige filetée 2 et l'écrou 3 amovibles. Ainsi, il est possible de remplacer la tige filetée 2 et l'écrou 3 sans démonter et sans dessouder la vanne 1 en cas d'usure par exemple.

Lors de l'ouverture de l'obturateur 5, le registre 42 solidaire de l'obturateur 5 est apte à empêcher le contact entre l'écrou 3 et la traverse haute 72 en butant contre la plateforme 41.

Selon l'invention, la solution pour les moyens de blocage 6 consiste à utiliser des billes en acier disposées dans une cage à friction sur la traverse haute 72 comme remplacement aux poussoirs à ressort 61. Autrement dit, les moyens de blocage 6 comprennent un système apte à réaliser un blocage par roulement à billes.

Dans ce cas, il est avantageux de lubrifier ledit système pour préserver les moyens de blocage 6 contre l'oxydation.

Par ailleurs, l'invention n'est pas limitée à ces modes de réalisation mais en embrasse toutes les variantes, par exemple une tige ou un écrou ayant des profils non-décrits peuvent être utilisés dans un mode de réalisation de l'invention.

## Revendications

1. Vanne guillotine (1) comprenant un dispositif de mise en mouvement d'un obturateur (5) de vanne (1), le dispositif comprenant une tige filetée (2) montée à rotation dans la direction de déplacement de l'obturateur (5) et un écrou (3) associé à l'obturateur (5) apte à coopérer avec la tige filetée (2), **caractérisé en ce que** la tige filetée (2) comprend plusieurs filets et un pas de vis compris entre 40 et 200 mm, et **en ce que** le dispositif comprend des moyens de blocage (6) en rotation de la tige (2) dans le sens de la fermeture et de l'ouverture de l'obturateur (5), la vanne guillotine (1) comprenant une traverse haute (72) solidaire des moyens de blocage (6) comportant des billes en acier disposées sur une cage à friction sur ladite traverse haute (72).

2. Vanne guillotine (1) selon la revendication 1, dans lequel la tige filetée (2) comprend 8 filets et constitue avec l'écrou (3) un ensemble amovible.

3. Vanne guillotine (1) selon l'une des revendications précédentes, dans lequel le dispositif comprend un registre (40), l'écrou (3) comportant une collerette fixée sur le registre (40) associé à l'obturateur (5).

4. Vanne guillotine (1) selon l'une des revendications précédentes, dans lequel ledit écrou (3) est en bronze ou en polymère.

5. Vanne guillotine (1) selon la revendication 4, dans lequel les moyens de blocage (6) sont configurés pour maintenir ledit registre (40) en position dès que la tige filetée (2) a parcouru un angle de rotation sensiblement égal à un angle x, x dépendant de la structure des moyens de blocage (6).

6. Vanne guillotine (1) selon l'une des revendications précédentes, comprenant un joint d'étanchéité (8) en caoutchouc EPDM de forme sensiblement cylindrique, carrée ou rectangulaire entourant une voie (9) de la vanne (1) apte à permettre l'écoulement d'un fluide à travers elle (9).

7. Vanne guillotine (1) selon l'une des revendications précédentes, comprenant des glissières de part et d'autre de la vanne, en polyéthylène haute densité, aptes à faire glisser l'obturateur (5).

## Patentansprüche

1. Guillotinenventil (1) mit einer Vorrichtung zum Bewegen eines Absperrorgans (5) des Ventils (1), wobei die Vorrichtung eine Gewindestange (2) umfasst, die in Verschiebungsrichtung des Absperrorgans (5) drehbar gelagert ist, und eine Mutter (3), die dem Absperrorgan (5) zugeordnet ist, das ausgelegt ist, mit der Gewindestange (2) zusammenzuwirken, **dadurch gekennzeichnet, dass** die Gewindestange (2) mehrere Gewinde und eine Gewindesteigung zwischen 40 und 200 mm umfasst, und dadurch, dass die Vorrichtung Verriegelungsmittel (6) bei Drehung der Stange (2) in Schließ- und Öffnungsrichtung des Absperrorgans (5) umfasst, wobei das Guillotinenventil (1) einen oberen Quersteg (72) umfasst, der einstückig mit den Verriegelungsmitteln (6) und Stahlkugeln umfasst, die auf einem Reibungskäfig auf dem oberen Quersteg (72) angeordnet sind.

2. Guillotinenventil (1) nach Anspruch 1, **dadurch gekennzeichnet, dass** die Gewindestange (2) 8 Gewinde umfasst und mit der Mutter (3) eine lösbare Baugruppe bildet.

3. Guillotinenventil (1) nach einem der vorhergehenden Ansprüche, wobei die Vorrichtung ein Schieber (40) umfasst, wobei die Mutter (3) einen Kragen umfasst, der am den Absperrorgan (5) zugeordneten Schieber (40) befestigt ist.

4. Guillotinenventil (1) nach einem der vorhergehenden Ansprüche, wobei die Mutter (3) aus Bronze oder Polymer ist.

5. Guillotinenventil (1) nach Anspruch 4, wobei die Verriegelungsmittel (6) so konfiguriert sind, dass sie den Schieber (40) in Position halten, sobald die Gewindestange (2) einen Drehwinkel zurückgelegt hat, der im Wesentlichen gleich einem Winkel x ist, wobei x abhängig von der Struktur der Verriegelungsmittel (6) ist.

6. Guillotinenventil (1) nach einem der vorhergehenden Ansprüche, umfassend eine Dichtung (8) aus EPDM-Kautschuk mit einer im Wesentlichen zylindrischen, quadratischen oder rechteckigen Form, die einen Weg (9) des Ventils (1) umgibt, der ausgelegt ist, um den Durchfluss eines Fluids durch sich (9) zu ermöglichen.

7. Guillotinenventil (1) nach einem der vorhergehenden Ansprüche, umfassend Gleitführungen auf beiden Seiten des Ventils, die aus hochdichtem Polyethylen hergestellt und geeignet zum Gleiten des Absperrorgans (5) sind.

## Claims

1. A slide valve (1) comprising a device for moving a valve (1) shutter (5), the device comprising a threaded rod (2) rotatably mounted in the direction of movement of the shutter (5) and a nut (3) associated with the shutter (5) capable of cooperating with the threaded rod (2), **characterised in that** the threaded rod (2) comprises several threads and a screw pitch comprised between 40 and 200 mm, and **in that** the device comprises means (6) for blocking the rod (2) in rotation in the direction of closing and opening of the shutter (5), the slide valve (1) comprising a upper crosspiece (72) integral with the blocking means (6) including steel balls disposed on a friction cage on said upper crosspiece (72).

2. The slide valve (1) according to claim 1, wherein the threaded rod (2) comprises 8 threads and constitutes with the nut (3) a removable assembly.

3. The slide valve (1) according to one of the preceding claims, wherein the device comprises a damper (40), the nut (3) including a collar fixed to the damper (40) associated with the shutter (5).

4. The slide valve (1) according to one of the preceding claims, wherein said nut (3) is made of bronze or polymer.

5. The slide valve (1) according to claim 4, wherein the blocking means (6) are configured to hold said damper (40) in position as soon as the threaded rod (2) has traversed an angle of rotation substantially equal to an angle x, x depending on the structure of the blocking means (6).

6. The slide valve (1) according to one of the preceding claims, comprising an EPDM rubber seal (8) of substantially cylindrical, square or rectangular shape surrounding a channel (9) of the valve (1) capable of allowing the flow of a fluid through said channel (9).

7. The slide valve (1) according to one of the preceding claims, comprising slides on both sides of the valve, made of high density polyethylene, capable of sliding the shutter (5).
